# EUROPEAN PATENT SPECIFICATION

(11) **EP 2 973 974 B1**
(45) Date of publication and mention of the grant of the patent: **13.05.2020**
(21) Application number: 13731785.5
(22) Date of filing: 26.06.2013
(51) Int. Cl.: H02M 3/158, H02M 1/00

(54) **DC-DC BOOST CONVERTER FOR PHOTOVOLTAIC APPLICATIONS BASED ON THE CONCEPT OF THE THREE-STATE SWITCHING CELL**
HOCHSETZSTELLER FÜR FOTOVOLTAIKANWENDUNGEN AUF BASIS DES KONZEPTS DER DREI-ZUSTANDS-SCHALTZELLE
CONVERTISSEUR ÉLÉVATEUR DE COURANT CONTINU POUR APPLICATIONS PHOTOVOLTAÏQUES BASÉ SUR LE CONCEPT DE CELLULE COMMUTATRICE À TROIS ÉTATS

(43) Date of publication of application: 20.01.2016
(73) Proprietor: Huawei Technologies Co., Ltd., Longgang District Shenzhen, Guangdong 518129 (CN)
(72) Inventor: TORRICO-BASCOPE, Grover Victor, S-16472 Kista (SE); MA, Jun, S-16440 Kista (SE)
(74) Representative: Körber, Martin Hans
(86) International application number: PCT/EP2013/063413
(87) International publication number: WO 2014/206463

(56) References cited:
- EP-A2- 0 834 982
- EP-A2- 2 506 413
- WO-A1-2006/137744
- TORRICO-BASCOPE G V ET AL: "A single phase PFC 3 kW converter using a three-state switching cell", POWER ELECTRONICS SPECIALISTS CONFERENCE, 2004. PESC 04. 2004 IEEE 35TH ANNUAL, AACHEN, GERMANY 20-25 JUNE 2004, PISCATAWAY, NJ, USA,IEEE, US, 20 June 2004 (2004-06-20), page 4037, XP010738357, DOI: 10.1109/PESC.2004.1355190 ISBN: 978-0-7803-8399-9
- RENE P TORRICO-BASCOPE ET AL: "A new isolated DC-DC boost converter using three-state switching cell", APPLIED POWER ELECTRONICS CONFERENCE AND EXPOSITION, 2008. APEC 2008. TWENTY-THIRD ANNUAL IEEE, IEEE, PISCATAWAY, NJ, USA, 24 February 2008 (2008-02-24), pages 607-613, XP031253309, ISBN: 978-1-4244-1873-2

## Description

### TECHNICAL FIELD

The present invention relates generally to power conversion, more particularly to PV power conditioning systems with maximum power point tracking (MPPT) and still more particularly to ultra-high efficiency DC-DC PWM converters for solar energy harvesting.

### BACKGROUND ART

The developing trends of the AC-DC, DC-DC converters are very high efficiency, high power density, and low cost. With PWM AC/DC, DC-DC Converters it is easier to achieve high efficiency due to their features and simplicity to add soft-switching cells into the main topological circuits. Furthermore, it is possible to increase the switching frequency in order to reduce the size of the reactive components.

However, there are still certain existing drawbacks regarding the soft-switched PWM converters at high voltage and high power applications, e.g. the high voltage across of switches and the high peak current through the switches resulting in high power losses and large volume of the heat-sinks. Furthermore, the classic PWM converters are less efficient and more difficult to optimize due to the reactive components and suitable semiconductors for high voltage and for high power levels. For instance silicon (Si) technology is being replaced by silicon carbide (SiC) technology, but this technology is still quite expensive today. However, the performance of silicon carbide semiconductors is not as expected in terms of efficiency based in the experiences from practical testing in the laboratory.

The most widely used converter type for photovoltaic (PV) power conditioning converters found in the industry today is the boost converter with active and passive snubbers, due to its availability the possibility to implement maximum power point tracking (MPPT) and achieve high efficiency. For high current applications and for high power applications in particular, it has been common to use two or more converters and couple them in parallel. This topology has been described in different papers, c.f. for instance Ref. 1.

When high power is being processed, semiconductors like IGBT, MOSFET, JFET, JBT, diodes, GTO, MCT and others have been the chosen solution for the active switches in the applications found in the industry. However using those devices has been associated with many problems that are limiting the efficiency and/or power density. Among these problems are:
- Current sharing between paralleled devices.
- Reduction of the switching frequency due to the increased commutation losses which increases the weight and the size of the unit.

Another drawback of the existing solutions is that the voltage-levels are too high and require high voltage semiconductors that are at least capable to handle more than 1.2kV to fulfill the PV system requirements. This reduces the performance and increases the volume, compromising the efficiency of the converter. However the existing silicon carbide technology can solve these kinds of problems, although they are still an expensive solution. Achieving high efficiency in the topological circuits existing in the market today is possible with an increased number of semiconductors (reducing the conduction losses). Further, reducing the switching frequency (to reduce the switching losses) will increase the size of the reactive components, which will increase the power density.

It is also possible to use silicon carbide semiconductors instead of silicon semiconductors, but this will increase the costs of the converter.

Further, if the converter is going to be optimized for high power density, the efficiency will be further reduced.

The choice for optimization in the solutions existing today is either efficiency or high density, but never both, and none of these choices will therefore provide a low cost solution.

Traditionally, paralleling of converters has been the way to solve the demand for increased DC-power, but due to the issues mentioned above, this is not the optimal solution for high efficiency, and high power density and low cost. Torrico-Bascope G. V. et al "A single phase PFC 3kW converter using a tree-state switching cell", Power Electronics Specialists Conference, 2004. Pesc. 04. 2004 IEEE 35th Annual, Aachen, Germany, 20 - 25 June 2004, Piscataway, NJ, USA, IEEE, US, 20 June 2004, page 4037 discloses a related DC-DC boost converter with a three-state switching cell, TSSC, which comprises two functional switches. EP 0 834 982 A2, EP 2 506 413 A2 and WO 2006/137744 A1 disclose further related DC-DC boost converters.

Torrico-Bascope R. P. et al "A New Isolated DC-DC Boost Converter using Three-State Switching Cell", Applied Power Electronics Conference and Exposition", 2008, APEC 2008, TWENTY-THIRD ANNUAL IEEE, IEEE, PISCATAWAY, NJ, USA, pages 607-613 discloses a snubber circuit comprising a flyback transformer.

On this background, it is an object of the invention to provide an ultra-high efficiency DC-DC boost converter that overcomes or at least reduces the problems of the prior art.

### DISCLOSURE OF THE INVENTION

On the above background it is an object of the present invention to provide a topological circuit especially suitable for high power, high efficiency, high power density and low cost applications in the art of power electronics for PV power generation systems or others applications, where it can be required.

In order to overcome the various drawbacks mentioned above, there is according to the invention provided a DC-DC boost converter with which it is possible to achieve very high efficiency, high power density and low cost at least due to following features:
- Simplified implementation of maximum power point tracking (MPPT) for PV system.
- Avoiding the use of silicon carbide semiconductors for high voltage and high frequency.
- Interleaving characteristics of the converter that reduces the current stress through the switches and reduces the number of components of input/output filter.
- Simplified passive snubber avoiding using silicon carbide diodes for the main boost diodes.
- Splitting the power switch in series on each switch in order to reduce the voltage stress and

consequently reduce the losses and avoiding utilizing silicon carbide semiconductors.
- Simplified and more efficient converter, due to the function of operation of the three-state switching cell used in the converter according to the invention.
- Increased reliability due to a better thermal distribution.
- Simplified and more efficient layout on the converter control strategy of semiconductors, which also reduces the losses.

An approach that is most suitable for high power is using converters with multilevel features for voltage and current instead.

In order to reduce the voltage stress when the output voltage is high, a series connection of the semiconductors is recommended. In order to reduce the current stress, connecting the semiconductors in parallel is preferred. In order to increase the efficiency, low voltage semiconductors in series are used, and replacing a single switch with a voltage balancing arrangement network is preferred. The complexity of this is increasing with the number of switches. However, the cost is still lower compared to silicon carbide semiconductors or modules.

Using standard silicon semiconductors is not only increasing the efficiency, but also simplifying the driving circuitry, reducing the complexity of the drivers that are offered for silicon carbide technology. Furthermore, the discrete solution is also cheaper than the semiconductors module.

The ripple of the current and voltage in the input and output is higher in the classic solution. Hence, larger input and output filters are required in the classic solution, increasing the volume and cost.

The reliability of the converter is also increased due to the reduction of the current stress on the semiconductors and the improved thermal distribution in the unit.

In the converter according to the invention the concept of the three-state switching cell technology has been applied. As described above, the main characteristics of this technology are the possibility to achieve high frequency, high efficiency, high power density and low cost due to the reduction of the losses and avoiding the complexity and the cost using silicon carbide technology.

Another important feature of the present invention is that the switch on each leg is also split in order to reduce the voltage stress. Two switches are connected in series, each with its own voltage balancing network in parallel with the respective switch and thereby guarantying voltage cascading in semiconductors in order to use low voltage devices to replace high voltage switches.

The present invention provides significant advantages over alternative solutions that can be obtainable with today's technology. Thus with the circuit according to the present invention it is possible to achieve the desired combination of extremely high efficiency, high power density and low cost.

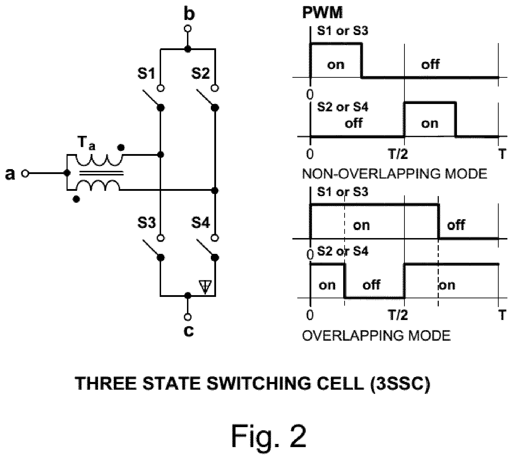

The present invention provides a DC-DC boost converter based on the application of the three-state switching cell technology in the converter. As described above, the main characteristics of applying this technology are the possibility to achieve high frequency, high efficiency, high power density, and low cost due to the reduction of the losses and avoiding the complexity and the cost using silicon carbide semiconductors. The concept of the three-state switching cell is for instance described in Ref 2. With the topological circuit described in figure 2 it is possible to improve the performance of energy conversion from an unregulated input to a well regulated output. Those topologies are for high current application and high power, with high efficiency compared to all classical non-isolated DC-DC PWM converters.

Thus, according to a first aspect of the invention there is provided a DC-DC boost converter for photovoltaic applications, said DC-DC converter comprising:
(i) an input terminal, an output terminal and a common or ground terminal;
(ii) a first autotransformer comprising an intermediate terminal and first and second end terminals;
(iii) a first diode, one terminal of which is coupled to said first end terminal of said first autotransformer;
(iv) a second diode, one terminal of which is coupled to said second end terminal of said first autotransformer;
(v) where the second terminals of said diodes are connected to said output terminal;
(vi) where the output terminal is coupled to said common terminal of the converter through a filter;
wherein a three-state switching cell is provided comprising four terminals and four switches S1, S2, S3, S4, wherein a first terminal is connected to the first switch S1, a second terminal is connected to the second switch S2, a third terminal is connected to the third switch S3 and a fourth terminal is connected to the fourth switch, and wherein said first terminal of the three-state switching cell is connected to said first end terminal of said first autotransformer, said third terminal of the three-state switching cell is connected to said second end terminal of said first autotransformer and said second and fourth terminals of the three-state switching cell is connected to said common or ground terminal of the converter wherein a snubber circuit is connected between the input terminal and the output terminal of the converter, in order to minimize the recovery current of boost diodes added to the three-state switching cell and wherein the snubber circuit comprises a flyback transformer, one end terminal of which is connected to
the input terminal of the converter, an intermediate terminal of which flyback transformer is connected to the intermediate terminal of the first autotransformer, and where the second end terminal of the flyback transformer is connected to one terminal of a diode, the second terminal of which is connected to the output terminal of the converter.

According to an embodiment of the DC-DC boost converter of the invention the three-state switching cell comprises switches S1, S2, S3 and S4 where each of the switches is coupled in parallel with a respective voltage balancing circuit.

According to an embodiment of the DC-DC boost converter of the invention the three-state switching cell comprises a first series connection of switches S1 and S2, each connected in parallel with its individual voltage balancing circuit and a second series connection of switches S3 and S4, each connected in parallel with its individual voltage balancing circuit.

According to an embodiment of the DC-DC boost converter of the invention the voltage balancing circuits are resistor-capacitor-diode (RCD) networks.

According to an embodiment of the DC-DC boost converter of the invention the switches S1, S2, S3 and S4 are silicon MOSFET's or insulated gate bipolar transistors (IGBT).

In order to provide multi-level output voltages from the converter, the output terminal of the converter may be coupled to the common (ground) terminal of the converter via a series connection of capacitors. According to a specific embodiment of the invention the DC-DC boost converter's output terminal is coupled to the common (ground) terminal of the converter via a voltage divider comprising a second capacitor in series with a third capacitor such that a second output terminal is provided at the connection between the second and third capacitors.

According to a second aspect, the present invention relates to the use of a DC-DC boost converter as disclosed above as a power conditioning converter for photovoltaic devices and systems.

A number of important technical effects are provided by the boost converter according to the present invention, such as:
Extremely High efficiency (greater than 99.4%).

High power density due to the reduction of the ripple of current and voltage in the input/output filters due to the characteristics of the topological circuit.

Low cost for high power application impacting in the size as well as the weight and the volume.

High reliability due to better thermal distribution.

Simple autotransformer and PCB assembly.

The converter according to the present invention can be implemented for any power level, as there is no inherent limitation in the topological circuit.

The circuit can also be extended for any number of converters and different kind of connections (series/parallel) using the concept of the three-state switching cell (3SSC).

The circuit is applied for PV system but it can be utilized at other applications where DC-DC converter is required.

Further objects, features, advantages and properties of the DC-DC boost converter according to the invention will become apparent from the detailed description.

### BRIEF DESCRIPTION OF THE DRAWINGS

In the following detailed portion of the description, the invention will be explained in more detail with reference to the exemplary embodiments shown in the drawings, in which:

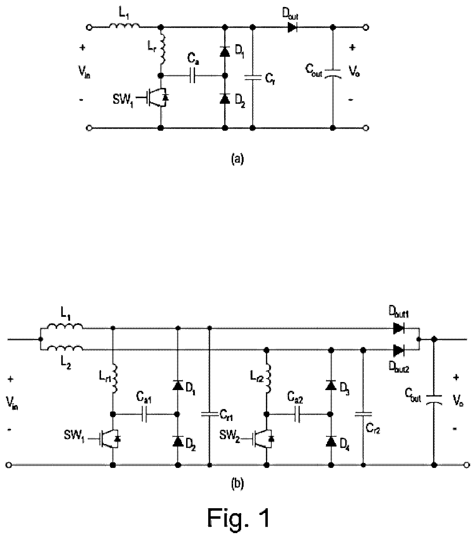

Figure 1 shows a soft-switching boost converter as described in Reference 1: (a) a single-switch soft-switching boost converter; (b) an interleaved soft switching boost converter (ISSBC);
Figure 2 shows the concept of the three-state switching cell (3SSC) as described in Reference 2;
Figure 3 shows an embodiment of a DC-DC boost converter according to the invention based on the concept of the three-state switching cell with lossless snubber and voltage balance network across switches;
Figure 4 shows an embodiment of the invention with the switches implemented by semiconductor configurations;
Figure 5 shows key waveforms of operation mode of the converter according to the invention; and
Figure 6 shows the voltage gain of the converter according to the invention as a function of duty cycle D.

### DETAILED DESCRIPTION OF PREFERRED EMBODIMENTS

In the following detailed description of the invention a specific embodiment of a DC-DC boost converter according to the teachings of the present invention will be described.

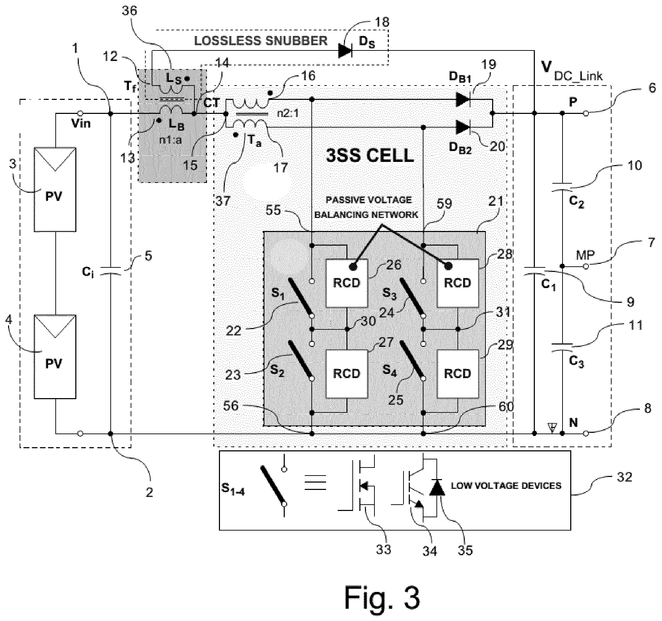

Referring to Figure 3 there is illustrated a schematic diagram of an embodiment of the PWM boost converter according to the invention based on a three-state switching cell (3SSC). The converter according to this embodiment has two input terminals 1, 2 and three output terminals 6, 7 and 8.

The DC-DC converter receives input power from any PV array 3, 4 (those connected in series or parallel) providing a voltage in parallel with Ci, 5. It can be seen that the input is connected in series from the input PV source through a flyback transformer Tf, 36, to the 3SSC input CT, 14, which flyback transformer 36 has two windings L_{B} and L_{S} coupled magnetically in a magnetic core with turn-ratio n1:a. From CT, 14, to the output terminal P, 6, the winding L_{S} and the diode D_{S} (this diode can either be a silicon or a silicon carbide diode) 18 are connected. This branch is working as a lossless snubber in order to avoid the recovery current from diodes D_{B1} and D_{B2}.

The three-State switching cell is linked between the output terminals P and N, reference numerals 6 and 8 and the intermediate terminal CT, 14 of a flyback transformer 37. The three-state switching cell 21 has four terminals 55, 56, 59 and 60, and is consisting of this autotransformer Ta, 37, with turn-ratio n2:1, end terminals 16, 17, respectively, and an intermediate terminal 15. The autotransformer 37 is acting as a current splitter; two diodes DB1 and DB2, 19, 20, respectively, (which diodes must be silicon diodes) are connected to an output filter and the four switches (S1 - S4), reference numerals 22, 23, 24 and 25, respectively.

The switches (S1, S2 and S3, S4) of the three-state switching cell 21 are respectively connected in series together with their voltage balancing RCD network 26, 27, 28, 29, respectively, to guarantee voltage sharing across each switch. The switches S1 through S4 can in practice be implemented in different ways, for instance using low voltage silicon MOSFET's or IGBT's as illustrated at 32.

The switches 22, 23, 24, 25 are each coupled in parallel with a separate passive voltage balancing network 26, 27, 28, 29 and the first switch 22 is coupled in series with the second switch 23 and said third switch 24 is coupled in series with said fourth switch 25.

The passive voltage balancing networks 26, 27, 28, 29 each comprise a resistor 47, 48, 49, 50, a capacitor 51, 52, 53, 54 and a diode 43, 44, 45, 46. The resistor 47, 48, 49, 50 is coupled in parallel with said diode 43, 44, 45, 46, and that this parallel coupling is coupled in series with said capacitor 51, 52, 53, 54.

As described in detail below, the switches 22, 23, 24, 25 can for instance be implemented by means of MOSFET's 39, 40, 41, 42, where each separate of the passive voltage balancing networks 26, 27, 28, 29 are coupled between the drain and source terminals of each separate MOSFET with said capacitor 51, 52, 53, 54 coupled to the drain terminal and said parallel connection of a diode 43, 44, 45, 46 and a resistor 47, 48, 49, 50 is coupled to the source terminal of the respective MOSFET.

According to the invention, the converter is provided with a snubber circuit 18, 36 that is connected between the input terminal 1 and the output terminal 6 of the converter.

The snubber circuit comprises a flyback transformer 36, one end terminal 13 of which is connected to the input terminal 1 of the converter, an intermediate terminal 14 that is connected to the intermediate terminal 15 of the first autotransformer 37, where the second end terminal 12 of the flyback transformer 36 is connected to one terminal of a diode 18, the second terminal of which is connected to the output terminal 6 of the converter.

An output filter is coupled between the P and N output terminals 6, 8 of the converter. In the shown embodiment of the invention, this filter comprises a capacitive network comprising capacitors C₁, C₂ and C₃, 9, 10 and 11, respectively, but it is understood that other filter configurations may be used instead, and that the application of such alternative filters would fall within the scope of the invention. The series connection of C₂ and C₃ provides a three-level DC-link P-MP-N voltage to supply any multi-level voltage source inverters. The capacitors C₁, C₂ and C₃ could for instance be film-capacitors or electrolytic capacitors.

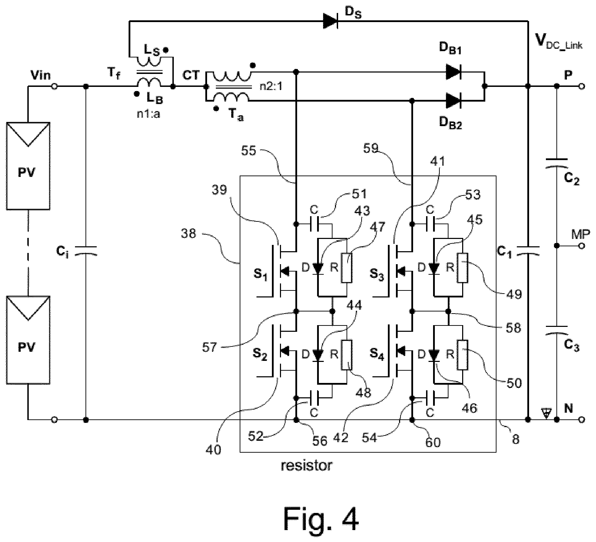

With reference to figure 4 there is shown an embodiment of the DC-DC converter according to the invention, in which the switches S1 through S4 are implemented using MOSTEF's. Figure 4 corresponds to figure 3 except from the detailed description of the 3SSC indicated by reference numeral 38 in figure 4.

In the embodiment shown in figure 4 the switches S1, S2, S3 and S4 have been implemented by means of MOSFET transistors 39, 40, 41, 42, and the respective voltage balancing RCD network are coupled between each respective MOSFET's source and drain terminals and consists of a capacitor 51, 52, 53, 54 in series with a parallel circuit consisting of a diode 43 in parallel with a resistor as indicated by reference numerals 43, 47; 44, 48; 45, 49 and 46, 50, respectively. The input terminals 55 and 56 of the three-state switching cell are coupled to the respective drain terminals of the MOSFTE's 39 and 41, and the respective source terminals of MOSFET's 39 and 41 are connected to the respective drain terminals of the MOSFETS's 40 and 42. The source terminals of MOSFET's 40 and 42 are both connected to the N-terminal 8 of the converter.

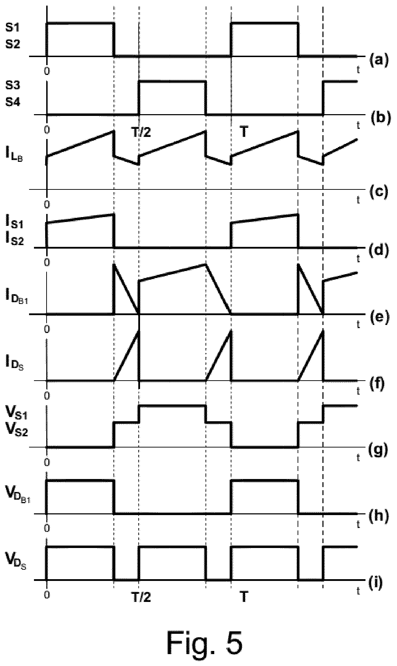

With reference to figure 5 there is shown key waveforms of operation mode of the converter according to the invention. More specifically, figure 5(a) shows the states (on/off) of the switches S₁ and S₂ as a function of time; figure 5(b) shows the states (on/off) of the switches S₃ and S₄ as a function of time; figure 5(c) shows the current I_{LB} through the autotransformer 36 from end terminal 13 out of the intermediate terminal 14 hereof as a function of time; figure 5(d) shows the currents I_{S1} and I_{S2} through the switches S₁ and S₂ respectively as a function of time; figure 5(e) shows the current I_{DB1} through the diode 19 in figure 3 as a function of time; figure 5(f) shows the current I_{DS} through the diode 18 in the snubber circuit as a function of time; figure 5(g) shows the voltages V_{S1} and V_{S2} over the switches S₁ and S₂, respectively, as a function of time; figure 5(h) shows the voltage V_{DB1} over the diode 19 in figure 3 as a function of time; and figure 5(i) shows the voltage V_{DS} over the snubber diode 19 as a function of time.

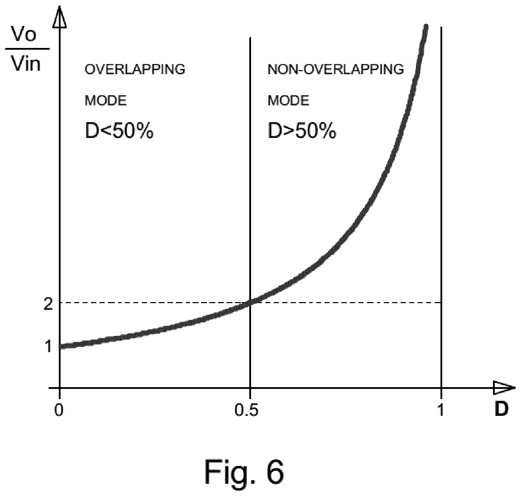

With reference to figure 6 there is shown the voltage gain, i.e. the ratio between the output voltage Vo and the input voltage Vin of the converter as a function of the duty cycle D of the pulse width modulation (PWM) used in the switching three-state switching cell.

Although the teaching of this application has been described in detail for purpose of illustration, it is understood that such detail is solely for that purpose, and variations can be made therein by those skilled in the art without departing from the scope of the teaching of this application.

The term "comprising" as used in the claims does not exclude other elements or steps and the term "a" or "an" as used in the claims does not exclude a plurality.

### REFERENCES

Ref 1: Chung-Yuen Won, a.t. al. "Interleaved Soft-Switching Boost converter for Photovoltaic Power-Generation System", IEEE Transactions on Power Electronics, Vol. 26, No 4, April 2011.

Ref 2: G. V. T. Bascopé e Ivo Barbi, "Generation of a family of non-isolated DC-DC PWM converters using a three-state switching cell", IEEE 31th Annual Power Electronics Specialists Conference, Volume: 2, pp:858-863, 18-23 June, 2000.

## Claims

1. A DC-DC boost converter for photovoltaic applications, said DC-DC converter comprising:
(i) an input terminal (1), an output terminal (6) and a common or ground terminal (8);
(ii) a first autotransformer (37) comprising an intermediate terminal (15) and first and second end terminals (16, 17);
(iii) a first diode (19), one terminal of which is coupled to said first end terminal (16) of said first autotransformer (37);
(iv) a second diode (20), one terminal of which is coupled to said second end terminal (17) of said first autotransformer (37);
(v) where the second terminals of said diodes (19, 29) are connected to said output terminal (6);
(vi) where the output terminal (6) is coupled to said common terminal (8) of the converter through a filter (9, 10, 11);
wherein a three-state switching cell (21) is provided comprising four terminals (55, 56, 59 and 60) and four switches (22, 23, 24, 25), wherein a first terminal (55) is connected to the first switch S1, a second terminal (56) is connected to the second switch S2, a third terminal (59) is connected to the third switch S3 and a fourth terminal (60) is connected to the fourth switch, and wherein said first terminal (55) of the three-state switching cell (21) is connected to said first end terminal (16) of said first autotransformer (37), said third terminal (59) of the three-state switching cell (21) is connected to said second end terminal (17) of said first autotransformer (37) and said second and fourth terminals (56, 60) of the three-state switching cell (21) is connected to said common or ground terminal (8) of the converter, **characterized in that** a snubber circuit (18, 36) is provided between said input terminal (1) and said output terminal (6) of the converter, wherein said snubber circuit comprises a flyback transformer (36), one end terminal (13) of which is connected to said input terminal (1) of the converter, an intermediate terminal (14) of which flyback transformer (36) is connected to the intermediate terminal (15) of said first autotransformer (37), and where the second end terminal (12) of the flyback transformer (36) is connected to one terminal of a diode (18), the second terminal of which is connected to the output terminal (6) of the converter.

2. A DC-DC boost converter according to claim 1, wherein said switches (22, 23, 24, 25) each are coupled in parallel with a separate passive voltage balancing network (26, 27, 28, 29) and that said first switch (22) is coupled in series with said second switch (23) and said third switch (24) is coupled in series with said fourth switch (25).

3. A DC-DC boost converter according to claim 2, wherein said passive voltage balancing networks (26, 27, 28, 29) each comprise a resistor (47, 48, 49, 50), a capacitor (51, 52, 53, 54) and a diode (43, 44, 45, 46) .

4. A DC-DC boost converter according to claim 3, wherein said resistor (47, 48, 49, 50) is coupled in parallel with said diode (43, 44, 45, 46), and that this parallel coupling is coupled in series with said capacitor (51, 52, 53, 54).

5. A DC-DC boost converter according to claim 2, 3 or 4 wherein said switches (22, 23, 24, 25) are implemented by means of MOSFETs (39, 40, 41, 42), where each separate of said passive voltage balancing networks (26, 27, 28, 29) are coupled between the drain and source terminals of each separate MOSFET with said capacitor (51, 52, 53, 54) coupled to the drain terminal and said parallel connection of a diode(43, 44, 45, 46) and a resistor(47, 48, 49, 50) is coupled to the source terminal of the respective MOSFET.

6. A DC-DC boost converter according to any of the preceding claims, wherein said first and second diodes (19, 20) are silicon diodes.

7. A DC-DC boost converter according to any of the preceding claims, wherein said output terminal (6) is coupled to said common terminal (8) via a voltage divider comprising a second capacitor (10) in series with a third capacitor (11) and that a second output terminal (7) is provided at the connection between the second and third capacitors (10, 11) .

8. A DC-DC boost converter according to claim 2, 3 or 4, wherein said switches (22, 23, 24, 25) are implemented by insulated gate bipolar transistors, IGBT's.

9. The use of a DC-DC boost converter according to any of the preceding claims 1 to 8 as a power conditioning converter for photovoltaic devices and systems.

## Patentansprüche

1. Aufwärtsgleichstromumsetzer für Photovoltaikanwendungen, wobei der Gleichstromumsetzer Folgendes umfasst:
(i) einen Eingangsanschluss (1), einen Ausgangsanschluss (6) und einen gemeinsamen oder Masseanschluss (8);
(ii) einen ersten Spartransformator (37), der einen Zwischenanschluss (15) und einen ersten und einen zweiten Endanschluss (16, 17) umfasst;
(iii) eine erste Diode (19), wovon ein Anschluss an den ersten Endanschluss (16) des ersten Spartransformators (37) gekoppelt ist; und
(iv) eine zweite Diode (20), wovon ein Anschluss an den zweiten Endanschluss (17) des ersten Spartransformators (37) gekoppelt ist; wobei
(v) die zweiten Anschlüsse der Dioden (19, 29) mit dem Ausgangsanschluss (6) verbunden sind und
(vi) der Ausgangsanschluss (6) über ein Filter (9, 10, 11) an den gemeinsamen Anschluss (8) des Umsetzers gekoppelt ist; wobei
eine Schaltzelle (21) mit drei Zuständen vorgesehen ist, die vier Anschlüsse (55, 56, 59 und 60) und vier Schalter (22, 23, 24, 25) umfasst, wobei ein erster Anschluss (55) mit dem ersten Schalter S1 verbunden ist, ein zweiter Anschluss (56) mit dem zweiten Schalter S2 verbunden ist, ein dritter Anschluss (59) mit dem dritten Schalter S3 verbunden ist und ein vierter Anschluss (60) mit dem vierten Schalter verbunden ist und der erste Anschluss (55) der Schaltzelle (21) mit drei Zuständen mit dem ersten Endanschluss (16) des ersten Spartransformators (37) verbunden ist, der dritte Anschluss (59) der Schaltzelle (21) mit drei Zuständen mit dem zweiten Endanschluss (17) des ersten Spartransformators (37) verbunden ist und der zweite und der vierte Anschluss (56, 60) der Schaltzelle (21) mit drei Zuständen mit dem gemeinsamen oder Masseanschluss (8) des Umsetzers verbunden ist, **dadurch gekennzeichnet, dass** eine "Snubber"-Schaltung (18, 36) zwischen dem Eingangsanschluss (1) und dem Ausgangsanschluss (6) des Umsetzers vorgesehen ist, wobei die "Snubber"-Schaltung einen Rücklauftransformator (36) umfasst, wovon ein Endanschluss (13) mit dem Eingangsanschluss (1) des Umsetzers verbunden ist, wobei ein Zwischenanschluss (14) des Rücklauftransformators (36) mit dem Zwischenanschluss (15) des ersten Spartransformators (37) verbunden ist und der zweite Endanschluss (12) des Rücklauftransformators (36) mit einem Anschluss einer Diode (18), wovon der zweite Anschluss mit dem Ausgangsanschluss (6) des Umsetzers verbunden ist, verbunden ist.

2. Aufwärtsgleichstromumsetzer nach Anspruch 1, wobei die Schalter (22, 23, 24, 25) jeweils zu einem getrennten passiven Spannungsausgleichsnetz (26, 27, 28, 29) parallelgeschaltet sind und wobei der erste Schalter (22) mit dem zweiten Schalter (23) in Reihe geschaltet ist und der dritte Schalter (24) mit dem vierten Schalter (25) in Reihe geschaltet ist.

3. Aufwärtsgleichstromumsetzer nach Anspruch 2, wobei die passiven Spannungsausgleichsnetze (26, 27, 28, 29) jeweils einen Widerstand (47, 48, 49, 50), einen Kondensator (51, 52, 53, 54) und eine Diode (43, 44, 45, 46) umfassen.

4. Aufwärtsgleichstromumsetzer nach Anspruch 3, wobei der Widerstand (47, 48, 49, 50) zur Diode (43, 44, 45, 46) parallelgeschaltet ist und wobei diese Parallelschaltung mit dem Kondensator (51, 52, 53, 54) in Reihe geschaltet ist.

5. Aufwärtsgleichstromumsetzer nach Anspruch 2, 3 oder 4, wobei die Schalter (22, 23, 24, 25) mittels MOSFETs (39, 40, 41, 42) implementiert sind, wobei jedes einzelne der passiven Spannungsausgleichsnetze (26, 27, 28, 29) zwischen den Drain- und den Source-Anschluss jedes einzelnen MOSFETS geschaltet ist, wobei der Kondensator (51, 52, 53, 54) an den Drain-Anschluss gekoppelt ist und die Parallelschaltung einer Diode (43, 44, 45, 46) und eines Widerstands (47, 48, 49, 50) an den Source-Anschluss des entsprechenden MOSFET gekoppelt ist.

6. Aufwärtsgleichstromumsetzer nach einem der vorhergehenden Ansprüche, wobei die erste und die zweite Diode (19, 20) Siliziumdioden sind.

7. Aufwärtsgleichstromumsetzer nach einem der vorhergehenden Ansprüche, wobei der Ausgangsanschluss (6) mittels eines Spannungsteilers, der einen zweiten Kondensator (10) in Reihe mit einem dritten Kondensator (11) umfasst, an den gemeinsamen Anschluss (8) gekoppelt ist und wobei ein zweiter Ausgangsanschluss (7) bei der Verbindung zwischen dem zweiten und dem dritten Kondensator (10, 11) vorgesehen ist.

8. Aufwärtsgleichstromumsetzer nach Anspruch 2, 3 oder 4, wobei die Schalter (22, 23, 24, 25) durch Bipolartransistoren mit isoliertem Gate, IGBTs, implementiert sind.

9. Verwendung eines Aufwärtsgleichstromumsetzers nach einem der vorhergehenden Ansprüche 1 bis 8 als ein Leistungskonditionierungsumsetzer für Photovoltaikvorrichtungen und Photovoltaiksysteme.

## Revendications

1. Convertisseur élévateur de courant continu pour des applications photovoltaïques, ledit convertisseur de courant continu comprenant :
(i) une borne d'entrée (1), une borne de sortie (6) et une borne commune ou de masse (8) ;
(ii) un premier autotransformateur (37) comprenant une borne intermédiaire (15) et des première et seconde bornes d'extrémité (16, 17) ;
(iii) une première diode (19), dont une borne est couplée à ladite première borne d'extrémité (16) dudit premier autotransformateur (37) ;
(iv) une seconde diode (20), dont une borne est couplée à ladite seconde borne d'extrémité (17) dudit premier autotransformateur (37) ;
(v) les secondes bornes desdites diodes (19, 29) étant connectées à ladite borne de sortie (6) ;
(vi) la borne de sortie (6) étant couplée à ladite borne commune (8) du convertisseur par l'intermédiaire d'un filtre (9, 10, 11) ;
dans lequel une cellule de commutation à trois états (21) est fournie comprenant quatre bornes (55, 56, 59 et 60) et quatre commutateurs (22, 23, 24, 25), dans lequel une première borne (55) est connectée au premier commutateur S1, une deuxième borne (56) est connectée au deuxième commutateur S2, une troisième borne (59) est connectée au troisième commutateur S3 et une quatrième borne (60) est connectée au quatrième commutateur, et dans lequel ladite première borne (55) de la cellule de commutation à trois états (21) est connectée à ladite première borne d'extrémité (16) dudit premier autotransformateur (37), ladite troisième borne (59) de la cellule de commutation à trois états (21) est connectée à ladite seconde borne d'extrémité (17) dudit premier autotransformateur (37) et lesdites deuxième et quatrième bornes (56, 60) de la cellule de commutation à trois états (21) sont connectées à ladite borne commune ou de masse (8) du convertisseur, **caractérisé en ce que** un circuit d'amortissement (18, 36) est prévu entre ladite borne d'entrée (1) et ladite borne de sortie (6) du convertisseur, dans lequel ledit circuit d'amortissement comprend un transformateur flyback (36), dont une borne d'extrémité (13) est connectée à ladite borne d'entrée (1) du convertisseur, une borne intermédiaire (14) dudit transformateur flyback (36) est connectée à la borne intermédiaire (15) dudit premier autotransformateur (37), et dans lequel la seconde borne d'extrémité (12) du transformateur flyback (36) est connectée à une borne d'une diode (18), dont la seconde borne est connectée à la borne de sortie (6) du convertisseur.

2. Convertisseur élévateur de courant continu selon la revendication 1, dans lequel lesdits commutateurs (22, 23, 24, 25) sont chacun couplés en parallèle avec un réseau d'équilibrage passif de tension (26, 27, 28, 29) distinct et ledit premier commutateur (22) est couplé en série avec ledit deuxième commutateur (23) et ledit troisième commutateur (24) est couplé en série avec ledit quatrième commutateur (25).

3. Convertisseur élévateur de courant continu selon la revendication 2, dans lequel lesdits réseaux d'équilibrage passif de tension (26, 27, 28, 29) comprennent chacun une résistance (47, 48, 49, 50), un condensateur (51, 52, 53, 54) et une diode (43, 44, 45, 46).

4. Convertisseur élévateur de courant continu selon la revendication 3, dans lequel ladite résistance (47, 48, 49, 50) est couplée en parallèle avec ladite diode (43, 44, 45, 46), et ce couplage parallèle est couplé en série avec ledit condensateur (51, 52, 53, 54).

5. Convertisseur élévateur de courant continu selon la revendication 2, 3 ou 4, dans lequel lesdits commutateurs (22, 23, 24, 25) sont mis en oeuvre au moyen de plusieurs MOSFET (39, 40, 41, 42), où chaque réseau distinct parmi lesdits réseaux d'équilibrage passif de tension (26, 27, 28, 29) est couplé entre les bornes de drain et de source de chaque MOSFET distinct avec ledit condensateur (51, 52, 53, 54) couplé à la borne de drain et ledit montage en parallèle d'une diode (43, 44, 45, 46) et d'une résistance (47, 48, 49, 50) est couplé à la borne de source du MOSFET respectif.

6. Convertisseur élévateur de courant continu selon l'une quelconque des revendications précédentes, dans lequel lesdites première et seconde diodes (19, 20) sont des diodes en silicium.

7. Convertisseur élévateur de courant continu selon l'une quelconque des revendications précédentes, dans lequel ladite borne de sortie (6) est couplée à ladite borne commune (8) par l'intermédiaire d'un diviseur de tension comprenant un deuxième condensateur (10) en série avec un troisième condensateur (11) et une seconde borne de sortie (7) est prévue au niveau de la connexion entre les deuxième et troisième condensateurs (10, 11).

8. Convertisseur élévateur de courant continu selon la revendication 2, 3 ou 4, dans lequel lesdits commutateurs (22, 23, 24, 25) sont mis en oeuvre par des transistors bipolaires à grille isolée, des IGBT.

9. Utilisation d'un convertisseur élévateur de courant continu selon l'une quelconque des revendications 1 à 8 précédentes en tant que convertisseur de conditionnement d'énergie pour des dispositifs et des systèmes photovoltaïques.
